# EUROPÄISCHE PATENTANMELDUNG

(11) **EP 2 879 199 A1**
(43) Veröffentlichungstag der Anmeldung: **03.06.2015**
(21) Anmeldenummer: 13183795.7
(22) Anmeldetag: 10.09.2013
(51) Int. Cl.: H01M 2/10, B60L 11/18, H01G 9/00, H01G 11/18, H01M 10/60

(54) **Energiespeichereinrichtung**

(71) Anmelder: Flextronics International Kft., 8660 Tab (HU)
(72) Erfinder: Loewen, Viktor, 51069 Köln (DE)
(74) Vertreter: Rupprecht, Kay

(57) **Zusammenfassung**

Es wird eine Energiespeichereinrichtung (1), insbesondere zur Verwendung in Kraftfahrzeugen, aufweisend wenigstens einen Grundkörper (3) sowie mindestens ein daran befestigtes Gehäuseteil (5a, 5b) zur Aufnahme mindestens eines Energiespeichers (31), vorgeschlagen. Die Energiespeichereinrichtung zeichnet sich dadurch aus, dass der Grundkörper (3) zumindest einen integrierten Kühlkanal (17a-17e) für ein gasförmiges Medium aufweist.

## Beschreibung

Die Erfindung betrifft eine Energiespeichereinrichtung insbesondere zur Verwendung in Kraftfahrzeugen, gemäß dem Oberbegriff des Anspruchs 1.

Energiespeichereinrichtungen der hier angesprochenen Art sind grundsätzlich bekannt. Sie weisen wenigstens einen Grundkörper und wenigstens ein daran befestigtes Gehäuseteil auf, wobei das Gehäuseteil zur Aufnahme mindestens eines Energiespeichers, wie beispielsweise einer Batterie oder eines Kondensators, dient. Der Grundkörper bildet damit quasi einen Deckel, der das die Energiespeicher umfassende Gehäuseteil verschließt. Während des Betriebs der Energiespeichereinrichtung wird ein Teil der Betriebsleistung als Verlustleistung in Form von Wärme abgeführt. Aus diesem Grund muss eine Energiespeichereinrichtung eine geeignete Kühleinrichtung aufweisen, die häufig aufwändig ausgebildet ist und die Herstellungskosten der Energiespeichereinrichtung damit beträchtlich steigert.

Aufgabe der vorliegenden Erfindung ist es daher, eine Energiespeichereinrichtung zu schaffen, die eine effektive Kühlung der Energiespeichereinrichtung bereitstellt, und die darüber hinaus einfach aufgebaut und daher kostengünstig herstellbar ist.

Zur Lösung der oben genannten Aufgabe wird eine Energiespeichereinrichtung mit den Merkmalen des Anspruchs 1 vorgeschlagen. Die Energiespeichereinrichtung dient insbesondere zur Verwendung in Kraftfahrzeugen und weist wenigstens einen Grundkörper und mindestens ein darin befestigtes Gehäuseteil zur Aufnahme mindestens eines Energiespeichers, wie beispielsweise einer Batterie bzw. mehrerer zusammengefasster Batteriezellen oder einer oder mehrere Doppelschicht- oder Superkondensatoren auf. Die Energiespeichereinrichtung zeichnet sich dadurch aus, dass der Grundkörper zumindest einen integrierten Kühlkanal für ein gasförmiges Medium aufweist.

Ein wesentlicher Punkt der Erfindung liegt somit darin, dass die Kühleinrichtung der erfindungsgemäßen Energiespeichereinrichtung im Wesentlichen passiv ausgebildet ist und durch den mindestens einen in den Grundkörper (Deckel des Gehäuseteils) integrierten Kühlkanal ein Kamineffekt erzeugt wird, der eine passive effektive Kühlung mit Hilfe der Umgebungsluft der Energiespeichereinrichtung realisiert.

Der zumindest eine Kühlkanal erstreckt sich vorzugsweise in einer Höhenrichtung und/oder in einer Querrichtung und/oder in einer Diagonalrichtung des Grundkörpers und ist vorzugsweise zumindest zu einer Oberseite der Energiespeichereinrichtung hin geöffnet. Auf diese Weise kann ein besonders guter Kamineffekt erhalten werden, so dass eine passive Kühlung realisiert werden kann, d.h. also ohne zusätzliche Antriebs- oder Fluidfördereinrichtungen zur Erzeugung eines Kühleffekts. Der Grundkörper ist vorzugsweise plattenartig ausgebildet und der darin integral ausgebildete Kühlkanal wird vorzugsweise zumindest bereichsweise durch zwei Seitenwandungen des plattenartigen Grundkörpers begrenzt. Beispielsweise ist es denkbar, dass der Kühlkanal in den Grundkörper eingefräst oder eingebohrt ist und in Form einer Durchgangsbohrung oder Durchgangsöffnung in dem Grundkörper ausgebildet ist. Denkbar ist jedoch auch eine Ausführungsform der Erfindung, bei der der Grundkörper nicht einteilig, sondern zweiteilig ausgebildet ist. Insgesamt können auch mehr als ein, insbesondere zwei oder mehr, vorzugsweise fünf Lüftungskanäle integral in dem Grundkörper angeordnet sein, die im Wesentlichen parallel nebeneinander und insbesondere durch Stege voneinander getrennt angeordnet sein können.

Um einen besonders effektiven Lufteinzug an der Unterseite des Grundkörpers zu gewährleisten, ist der wenigstens eine Kühlkanal vorzugsweise mit mindestens einer sich im Wesentlichen senkrecht zu dem Kühlkanal erstreckenden und in den Grundkörper eingebrachten Lufteinström-Öffnung verbunden. Vorzugsweise kann vorgesehen sein, dass der wenigstens eine Kühlkanal mit mindestens zwei an gegenüberliegenden Umfangsseiten des Grundkörpers vorgesehenen Lufteinström-Öffnungen in Verbindung steht. Im Übrigen kann auch vorgesehen sein, dass zur Verbesserung des Kamineffekts und der Lufteinströmung in den Grundkörper bzw. in die Kühlkanäle die mehreren Kühlkanäle zumindest in einer unteren Hälfte, insbesondere in einem unteren Drittel des Grundkörpers, miteinander in Fluidverbindung stehen.

Um einen verbesserten passiven Kühlungseffekt durch Umgebungsluft zu erzielen, ist die mindestens eine Lufteinström-Öffnung vorzugsweise in einer unteren Hälfte, insbesondere in einem unteren Drittel des Grundkörpers, bezogen auf die Höhenrichtung des Grundkörpers, angeordnet. An der Energiespeichereinrichtung, insbesondere an dem Gehäuse und/oder an dem Grundkörper, kann im Übrigen wenigstens ein Lüfter, beispielsweise ein elektrisch betriebener Radiallüfter, angeordnet sein. Durch den Lüfter kann dann Umgebungsluft angesaugt und in die Lufteinström-Öffnungen geblasen werden. Auf diese Weise kann der Kühlungseffekt der Energiespeichereinrichtung noch verbessert werden. Der Lüfter steht also vorzugsweise mit mindestens einer der Lufteinström-Öffnungen in Verbindung und ist dazu ausgebildet, Luft in die Lufteinström-Öffnung aktiv einzuleiten.

Bei dem in dem Gehäuse angeordneten Energiespeicher kann es sich beispielsweise um eine, insbesondere aus mehreren, Batteriezellen bestehende Batterie oder um einen Kondensator, insbesondere einen Doppelschicht- und/oder Superkondensator handeln, wobei mehrere Energiespeicher und somit mehrere Kondensatoren o. dgl. aufweisen kann. Vorzugsweise weist der Grundkörper, der insbesondere quaderförmig bzw. plattenartig ausgebildet ist, zwei gegenüberliegende Seitenflächen auf, wobei an jeder Seitenfläche ein Gehäuseteil zur Aufnahme mindestens eines Energiespeichers befestigt ist. In diesem Fall ist die Energiespeichereinrichtung also im Wesentlichen symmetrisch ausgebildet und weist zu beiden Seiten des Grundkörpers jeweils einen Gehäuseteil auf, der wiederum jeweils zur Aufnahme von ein oder mehreren Energiespeichern vorgesehen ist. Insbesondere bei einer symmetrischen Anordnung, bei der zu beiden Seiten des Grundkörpers jeweils ein Gehäuseteil angeordnet ist, kann der Grundkörper mindestens eine Stromdurchführung zur elektrischen Verbindung, insbesondere zur Reihenschaltung von in getrennten Gehäuseteilen angeordneten Energiespeichern aufweisen. Vorzugsweise sind zwei oder mehr Stromdurchführungen vorgesehen. Die Stromdurchführung ist vorzugsweise derart angeordnet, dass sie den zumindest einen Kühlkanal in dem Grundkörper durchgreift und sich insbesondere von einer Seitenfläche des Grundkörpers zu der gegenüberliegenden Seitenfläche des Grundkörpers (durch den Kühlkanal hindurch) erstreckt. Alternativ kann vorgesehen sein, dass die Stromdurchführung durch die zwischen zwei Kühlkanälen vorgesehenen Stege des Grundkörpers angeordnet ist.

Um die in den Energiespeichern entstehende Wärme besonders gut an den Grundkörper und die Kühlkanäle abzuleiten, ist vorzugsweise vorgesehen, dass der mindestens eine in einem Gehäuseteil angeordnete Energiespeicher zumindest mittelbar mit einem Wärmeleitbereich in Verbindung steht, der mit dem Grundkörper verbunden ist. Bei dem Wärmeleitbereich kann es sich um hoch wärmeleitende Materialien, beispielsweise in Form eines Wärmeleit-Pads aus Softsilikonfolie oder dergleichen geeignetem Material handeln. Durch die in dem Grundkörper angeordnete Stromdurchführung können sämtliche auch in getrennten Gehäuseteilen angeordneten Energiespeicher in Reihe geschaltet werden und somit die Kapazität der Energiespeichereinrichtung deutlich erhöhen. Durch eine Anordnung der Stromdurchführung in den Kühlkanälen können auch die Stromdurchführungen (Hochstrombrücken) in vorteilhafter Weise gekühlt werden. Eine mittelbare Verbindung der Energiespeicher über einen Wärmeleitbereich mit dem Grundkörper kann insbesondere über eine Leiterplatte erfolgen, an der die Energiespeicher befestigt sind, sodass also an einer Seite der Leiterplatte der/die Energiespeicher und an der gegenüberliegenden Seite der Wärmeleitbereich angeordnet ist. Die Energiespeicher sind folglich an einer Leiterplatte angebracht, insbesondere angelötet, während die Leiterplatte über den Wärmeleitbereich (Wärmeleit-Pad) mit dem Grundkörper verbunden ist.

Besonders vorteilhaft ist, wenn der Wärmeleitbereich flächig ausgebildet ist und sich über einen überwiegenden Teil zwischen der jeweiligen Leiterplatte und dem Grundkörper erstreckt. Im Übrigen sei noch darauf hingewiesen, dass zur Erzielung eines effektiven Kamineffekts der zumindest eine Kühlkanal vorzugsweise auch zu einer Unterseite der Energiespeichereinrichtung hin geöffnet ist. Auf diese Weise kann Luft an der Unterseite der Energiespeichereinrichtung bzw. des Grundkörpers in die Kühlkanäle eintreten, wo die eintretende kalte Luft erwärmt wird. Daraufhin steigt die erwärmte Luft in den Kühlkanälen auf. Durch das Aufsteigen der erwärmten Luft wird wiederum kalte Luft von der Unterseite des Grundkörpers angesogen (Kamineffekt) und sorgt folglich für einen effektiven Abtransport der die Kühlung der Wärmeleistung der in den Gehäuseteilen angeordneten Komponenten. Der Wärmeleitbereich zwischen den Komponenten und dem Grundkörper sorgt dabei für eine optimale Wärmeübertragung an den Grundkörper und damit für einen optimalen Kühleffekt.

Die Erfindung wird im Folgenden anhand der Zeichnung näher erläutert. Es zeigen:
- Fig. 1: Eine perspektivische Darstellung einer Energiespeichereinrichtung gemäß der Erfindung;
- Fig. 2: eine Draufsicht auf die Oberseite einer Energiespeichereinrichtung gemäß der Erfindung;
- Fig. 3: eine Seitenansicht einer Energiespeichereinrichtung gemäß der Erfindung;
- Fig. 4: eine Stirnseitenansicht der Energiespeichereinrichtung gemäß der Erfindung;
- Fig. 5: eine Schnittdarstellung der Energiespeichereinrichtung entlang der Schnittlinie A-A durch den Grundkörper der Energiespeichereinrichtung; und
- Fig. 6: eine Schnittdarstellung entlang der Schnittlinie B-B der Energiespeichereinrichtung gemäß der Erfindung.

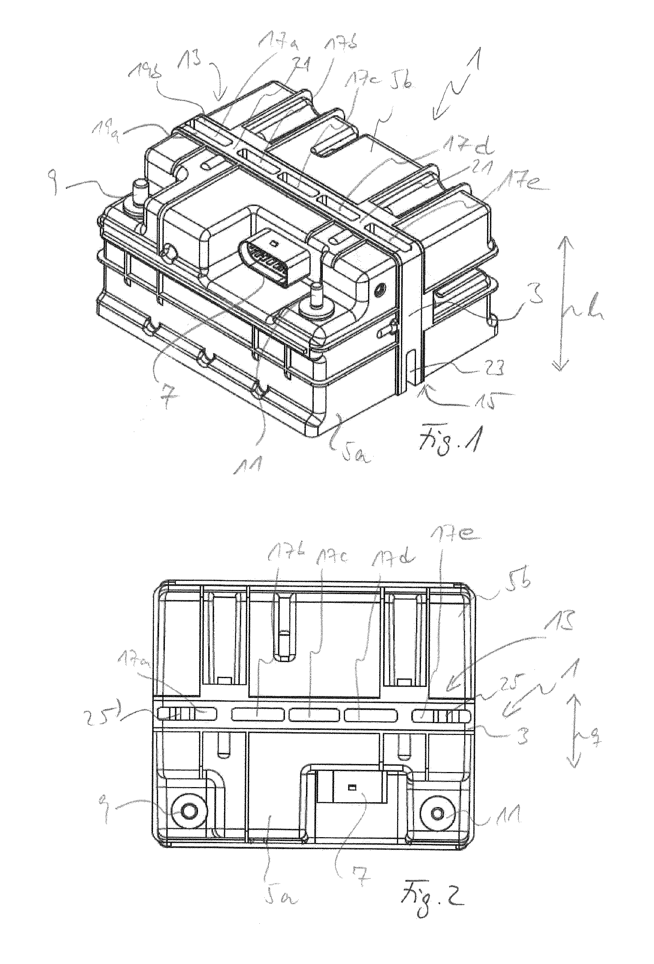

Fig. 1 zeigt eine perspektivische Darstellung einer Energiespeichereinrichtung 1. Die Energiespeichereinrichtung 1 umfasst bei der in Fig. 1 gezeigten Ausführungsform einen zentrisch angeordneten Grundkörper 3, der im Wesentlichen rechteckig und plattenförmig (quaderförmig) ausgebildet ist. Mit dem Grundkörper 3 sind zwei Gehäuseteile 5a und 5b verbunden, die gegenüberliegend angeordnet sind und jeweils mit einer Seite des Grundkörpers 3 in Verbindung stehen. Die Gehäuseteile 5a und 5b sind an der dem Grundkörper 3 zugewandten Seite hin im Wesentlichen offen, so dass der Grundkörper 3 quasi als Deckel für die beiden Gehäuseteile 5a und 5b dient.

Bei einer anderen Ausführungsform der Erfindung kann auch vorgesehen sein, dass lediglich das Gehäuseteil 5a mit dem Grundkörper 3 in Verbindung steht. Das zweite Gehäuseteil 5b dient im Wesentlichen zur Aufnahme von zusätzlichen Energiespeichern, wie Batterien oder Kondensatoren, welche die Kapazität der Energiespeichereinrichtung 1 insgesamt erhöhen können. Die Gehäuseteile 5a und 5b sind vorzugsweise mit dem Grundkörper 3 verschraubt oder auf sonstige Weise an diesem befestigt. Im Bereich der Auflagerflächen zwischen dem Grundkörper 3 und den Gehäuseteilen 5a und 5b sind vorzugsweise umlaufende Ringdichtungen vorgesehen, die einen dichten Abschluss zwischen dem Grundkörper 3 und den Gehäuseteilen 5a und 5b gewährleisten.

Sowohl der Grundkörper 3 als auch die Gehäuseteile 5a und 5b können aus einem Kunststoffmaterial, insbesondere im Spritzgussverfahren oder einem anderen geeigneten Verfahren, hergestellt sein. Denkbar ist es auch, den Grundkörper 3 aus einem anderen Material herzustellen, welches sich besonders gut zur Wärmeübertragung eignet. Denkbar ist es beispielsweise, den Grundkörper 3 aus Metall herzustellen.

In dem vorliegenden Ausführungsbeispiel können in dem Gehäuseteil 5a insbesondere sieben Superkondensatorzellen vorgesehen, während in dem gegenüberliegenden Gehäuseteil 5b insgesamt 14 Superkondensatorzellen angeordnet sein können. Die Gesamtkapazität der Energiespeichereinrichtung ist somit deutlich höher als bei einer Ausführungsform ohne das zweite gegenüberliegende Gehäuseteil 5b. Das Gehäuseteil 5a weist darüber hinaus einen Anschluss 11 auf, der insbesondere als Breitbandanschluss 14-polig ausgebildet ist und der mit einer in der Fig. 1 nicht gezeigten Leiterplatte in Verbindung steht. Mit der entsprechenden Leiterplatte sind auch die Energiespeicher in dem Gehäuseteil 5a, insbesondere also die darin angeordneten Superkondensatoren, verbunden. Über den Breitbandanschluss 7 kann eine Signalansteuerung der Energiespeicher erfolgen, um beispielsweise die Ladeleistung und Entladeleistung sowie die Temperatur und andere Parameter zu überwachen und insgesamt also die Funktionalität der Energiespeichereinrichtung entsprechend zu überwachen und zu steuern. Bei einer Anwendung der Energiespeichereinrichtung 1 in einem Kraftfahrzeug kann der Anschluss 7 beispielsweise mit dem Bussystem des Fahrzeugs und entsprechenden Steuergeräten mit dem Bordnetz verbunden werden. Das Gehäuseteil 5a weist darüber hinaus Anschlussklemmen, konkret einen Leistungsanschluss "Minus" 9 und einen Leistungsanschluss "Plus" 11 auf.

Die Energiespeichereinrichtung 1 weist eine Oberseite 13 und eine Unterseite 15 auf, wobei sich die Bezeichnungen auf einen Einbauzustand der Energiespeichereinrichtung 1, insbesondere in einem Kraftfahrzeug, beziehen. Die Unterseite ist in diesem Einbauzustand dem Boden zugewandt, so dass die Höhenrichtung h der Energiespeichereinrichtung 1 im Einbauzustand im Wesentlichen einer vertikalen Richtung entspricht. In der Fig. 1 erkennbar sind noch die zur Oberseite 13 der Energiespeichereinrichtung 1 hin offenen fünf Kühlkanäle 17a bis 17e, die integral in den Grundkörper 3 eingebracht sind. Insbesondere ist vorgesehen, dass die Kühlkanäle 17a bis 17e zur Unterseite 15 des Grundkörpers 3 hin ebenfalls offen sind, so dass diese als Durchgangsöffnungen in dem Grundkörper 3 integral ausgebildet sind.

Durch die integrale Ausbildung der Kühlkanäle 17a bis 17e in dem Grundkörper 3 werden diese also nicht nur von zwei gegenüberliegenden Seitenwänden 19a und 19b, sondern darüber hinaus von Stegen 21 begrenzt, welche die Kühlkanäle 17a bis 17e voneinander trennen. In einem unteren Drittel bezogen auf die Höhenrichtung h der Energiespeichereinrichtung 1, weist der Grundkörper 3 eine seitliche Lufteinström-Öffnung 23 auf, die sich im Wesentlichen senkrecht zu der Höhenrichtung h und damit senkrecht zu den Kühlkanälen 17a bis 17e erstreckt. Vorzugsweise ist auf der gegenüberliegenden Seite des Grundkörpers 3 (in der Fig. 1 nicht erkennbar), eine entsprechende Lufteinström-Öffnung 23 vorgesehen, die mit den Kühlkanälen 17a bis 17e in Fluidverbindung steht.

Die Fig. 1 macht noch deutlich, dass die Kühlkanäle 17a bis 17e einen im Wesentlichen rechteckigen Querschnitt aufweisen und einen überwiegenden Teil des Grundkörpers 3 einnehmen, so dass der Grundkörper 3 zu einem überwiegenden Teil aus Kühlkanälen 17a bis 17e und nur zu einem geringen Volumenanteil aus Seitenwänden 19a, 19b und Stegen 21 besteht.

Die Fig. 2 zeigt eine Draufsicht auf die Oberseite 13 einer Energiespeichereinrichtung 1 gemäß der Erfindung. Die Fig. 2 macht deutlich, dass in den beiden äußeren Kühlkanälen 17a und 17e jeweils eine Stromdurchführung 25 und 25' vorgesehen ist, welche den Grundkörper 3 und konkret die Kühlkanäle 17a und 17e in einer Querrichtung q durchgreifen, die senkrecht auf die Höhenrichtung h steht. Die Stromdurchführungen 25 und 25' dienen zur Verbindung der in den Gehäuseteilen 5a und 5b vorgesehenen Energiespeicher und insbesondere zur Reihenschaltung derselben, deren Gesamtenergie dann an den Klemmen 9 und 11 abgegeben werden kann.

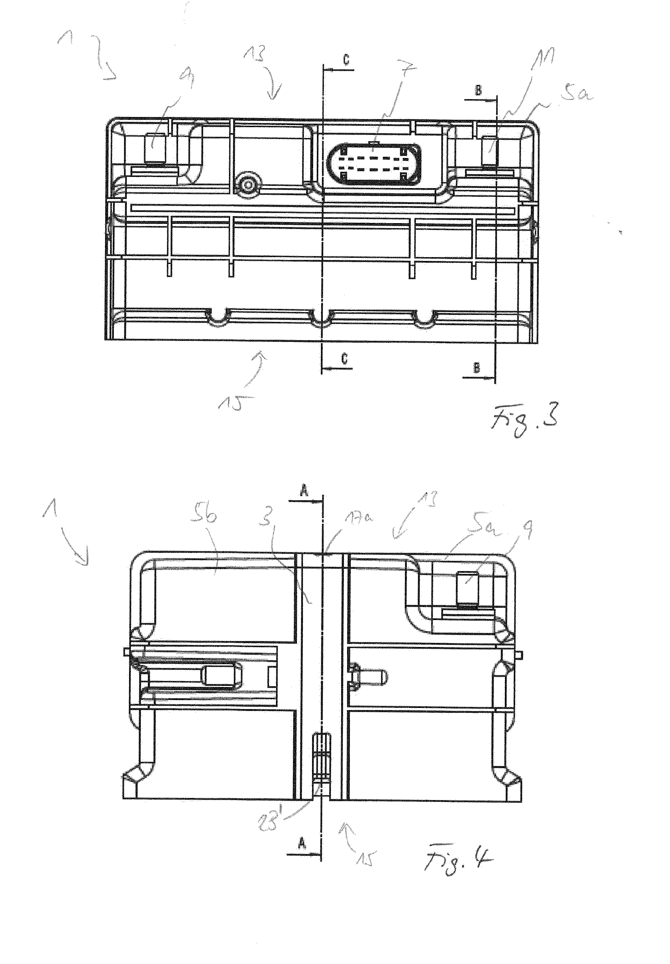

Die Fig. 3 zeigt noch eine Seitenansicht des Gehäuseteils 5a mit den beiden Anschlussklemmen 9 und 11 sowie dem Breitbandanschluss 7.

Die Fig. 4 zeigt eine Stirnseitenansicht der Energiespeichereinrichtung 1, welche die sandwichartige Anordnung des Grundkörpers 3 zwischen den Gehäuseteilen 5a und 5b sowie die Anordnung einer weiteren Lufteinström-Öffnung 23' in einem unteren Drittel des Grundkörpers 3 verdeutlicht.

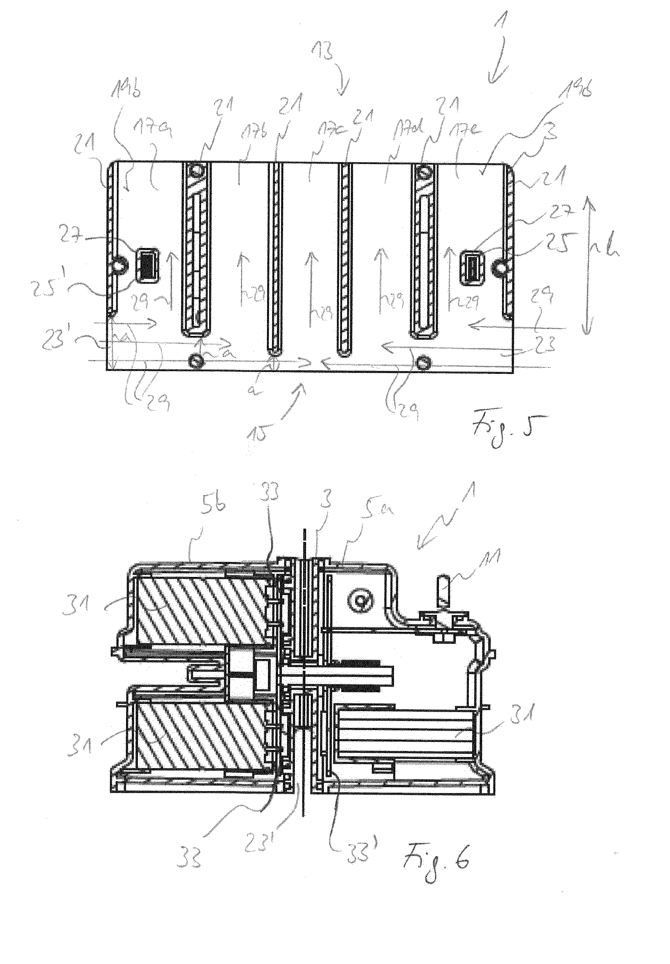

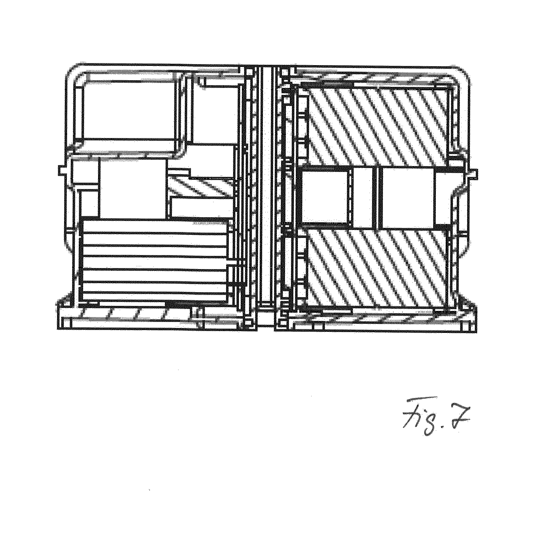

Die Fig. 5 zeigt eine Schnittansicht der Energiespeichereinrichtung 1 entlang der Schnittlinie A-A (siehe Fig. 4). Die Fig. 5 zeigt folglich eine Schnittansicht des Grundkörpers 3 mit den darin eingebetteten Kühlkanälen 17a bis 17e. Die Fig. 5 macht deutlich, dass die Stromdurchführungen 25 und 25' im Wesentlichen zentrischen in den beiden äußeren Kühlkanälen 17a und 17e angeordnet sind, um die in dem Gehäuseteil 5b angeordneten Kondensatoren mit den in dem Gehäuseteil 5a angeordneten Kondensatoren in Serie zu schalten. Insbesondere ist vorgesehen, dass die Stromdurchführungen 25 und 25' jeweils von einer Gehäusewandung 27 umgeben sind, die an die Kontur der Stromdurchführungen 25 und 25' im Wesentlichen angepasst ist und folglich die Stromdurchführungen gegenüber den Kühlkanälen 17a und 17e dicht abschließt. Die Gehäusewandungen 27 sind dabei vorzugsweise einstückig mit den Wandungen 19a und 19b des Grundkörpers 3 ausgebildet und bilden damit quasi einen Tunnel bzw. eine Ummantelung für die Stromdurchführungen in den Kühlkanälen 17a und 17e. Es versteht sich, dass auch noch weitere, insbesondere auch in den Stegen 21 vorgesehene Stromdurchführungen vorgesehen sein können. Die Anordnung der Stromdurchführungen 25 in den Kühlkanälen ermöglicht jedoch eine effektive Kühlung derselben im Betrieb der Energiespeichereinrichtung 1.

Die Fig. 5 macht noch deutlich, dass im vorliegenden Ausführungsbeispiel insgesamt fünf sich in der Höhenrichtung h und insbesondere im Einbauzustand in der vertikalen Richtung erstreckenden Kühlkanäle 17a bis 17e vorgesehen sind, die jeweils durch Stege 21 des Grundkörpers 3 getrennt und im Wesentlichen parallel zueinander angeordnet sind. Die Kühlkanäle 17a bis 17d sind also insbesondere im Wesentlichen in Form von Durchgangsöffnungen in dem Grundkörper 3 vorgesehen, die vorliegend zwar einen im Wesentlichen rechteckigen Querschnitt aufweisen, der jedoch ebenso gut kreisförmig oder elliptisch ausgebildet sein kann. Die Fig. 5 macht außerdem deutlich, dass die jeweils seitlich in dem Grundkörper 3 angeordneten und gegenüberliegenden Lufteinström-Öffnungen 23 und 23' mit jedem der Kühlkanäle 17a bis 17e in Fluidverbindung steht, so dass ein gasförmiges Medium, insbesondere eine Umgebungsluft der Energiespeichereinrichtung 1, durch die Lufteinström-Öffnungen 23, 23' in den Grundkörper 3 und von dort aus in die Kühlkanäle 17a bis 17e gelangt. Durch die Lufteinström-Öffnungen 23 und 23' strömt folglich kalte Luft entlang der Pfeile 29, die durch die Wärmeübertragung von den Energiespeichern auf den Grundkörper 3 erwärmt und folglich durch die Kühlkanäle 17a bis 17e in Richtung der Oberseite 13 aufsteigt und durch das Aufsteigen wiederum neue kalte Luft angesaugt wird (Kamineffekt).

Zwischen jedem der Stege 21, welche die Kühlkanäle 17a bis 17e begrenzen und der Unterseite 15 des Grundkörpers 3 ist ein Abstand a vorgesehen, der die Höhe der jeweiligen Lufteintritts-Öffnung in den jeweiligen Kühlkanal definiert. Dabei ist bei der vorliegenden Ausführungsform vorgesehen, dass sich der Abstand a zwischen dem unteren Ende des Stegs 21 und der Unterseite 15 des Grundkörpers 3 sukzessive, insbesondere stufenförmig von der Umfangsfläche bis zur Mitte des Grundkörpers 3 hin verringert. Über die Öffnungen in der Oberseite 13 des Grundkörpers 3 kann die erwärmte Luft dann aus den Kühlkanälen 17a bis 17e entweichen.

Die Fig. 6 zeigt einen Schnitt entlang der Schnittlinie B-B (siehe Fig. 3) der Energiespeichereinrichtung 1. In Fig. 6 sind in dem Gehäuseteil 5b zwei Energiespeicher, konkret Superkondensatoren 31, erkennbar, während in dem Gehäuseteil 5a in der Schnittdarstellung ein Superkondensator 31 angedeutet ist. In dem Gehäuseteil 5b sind sämtliche Superkondensatoren 31 mit einer Leiterplatte 33 verbunden und insbesondere daran angelötet. In dem Gehäuseteil 5a sind die Superkondensatoren 31 mit einer entsprechenden Leiterplatte 33' verbunden. Die Superkondensatoren 31 sind weiterhin über Wärmeleitbereiche 35 mit dem Grundkörper 3 verbunden, wobei es sich bei dem Wärmeleitbereich 35 um ein Wärmeleit-Pad oder dergleichen handeln kann, das aus einem hoch wärmeleitenden Material, wie beispielsweise einer Softsilikonfolie oder dergleichen, ausgebildet ist.

Vorzugsweise ist jedem Energiespeicher, insbesondere jedem Superkondensator 31, ein abgetrennter Wärmeleitbereich 35 zugeordnet. Alternativ kann vorgesehen sein, dass ein zusammenhängender Wärmeleitbereich sämtlichen oder zumindest einem Teil der Energiespeicher eines Gehäuseteils zugeordnet ist. Der Wärmeleitbereich 35 bzw. die Wärmeleitbereiche 35 sind vorzugsweise zwischen der Leiterplatte 33 bzw. 33' und der jeweiligen zugeordneten Seitenwandung 19a, 19b des Grundkörpers 3 angeordnet, so dass also der Wärmeleitbereich 35 bzw. die mehreren voneinander getrennten Wärmeleitbereiche 35 an einer Seite mit dem Grundkörper 3 in Verbindung stehen und an der gegenüberliegenden Seite mit den Leiterplatten 33 bzw. 33' verbunden sind.

Durch die Wärmeleitbereiche kann eine im Betrieb der Energiespeichereinrichtung 1 erzeugte Verlustwärme der Energiespeicher in vorteilhafter Weise von der Leiterplatte auf den Grundkörper 3 und von dort aus auf die in den Kühlkanälen vorhandene Luft übertragen werden. Der Wärmeleitbereich kann wie gesagt in Form von Pads oder Folien ausgebildet sein und folglich als relativ dünne Materialschicht zwischen der Leiterplatte und dem Grundkörper zumindest bereichsweise angeordnet sein. Die Leiterplatten 33 bzw. 33' sind an dem offenen Ende der Gehäuseteile 5a und 5b angeordnet und sind folglich dem Grundkörper 3 im zusammengesetzten Zustand der Energiespeichereinrichtung 1 zugewandt.

Insgesamt schafft die vorliegende Erfindung eine vorteilhafte passive Kühleinrichtung für Energiespeichereinrichtungen, die sich durch in dem Grundkörper 3 angeordnete Kühlkanäle den Kamineffekt zunutze macht, um eine einfache aber effektive passive Kühlung zu realisieren. Im Übrigen kann ein in den Figuren nicht gezeigter Lüfter, insbesondere ein elektrischer betriebener Radiallüfter vorgesehen sein, der an zumindest einem der Gehäuseteile 5a oder 5b und insbesondere zusätzlich oder alternativ an dem Grundkörper 3 befestigt ist und für einen verbesserten Lufteintrag in die Kühlkanäle 17a bis 17e sorgt. Insbesondere ist vorgesehen, dass der Lüfter durch die Energiespeichereinrichtung 1 mit Energie gespeist wird. Die Fig. 6 macht im Übrigen noch deutlich, dass die Lufteinström-Öffnungen 23, 23' nicht nur zu einer Seite des Grundkörpers 3 hin offen sind, sondern sich zusätzlich zu der Unterseite 15 des Grundkörpers 3 erstrecken.

Die passive Kühlungseinrichtung gemäß der vorliegenden Erfindung kann insgesamt besonders einfach realisiert werden, indem eine geeignete Struktur von Kühlkanälen in den Grundkörper eingebracht wird und insbesondere zusätzliche Wärmeleitbereiche 35, zumindest mittelbar zwischen den Energiespeichern 31 und dem Grundkörper 3 (mittelbar über die Leiterplatten 33, 33') vorgesehen sind. Es sei an dieser Stelle noch einmal darauf hingewiesen, dass sich die Kühlkanäle nicht zwangsläufig in der Höhenrichtung h erstrecken müssen. Vielmehr sind auch ein oder mehrere Kühlkanäle denkbar, die sich in der Querrichtung q oder auch in einer Diagonalrichtung erstrecken. Auch Kombinationen von mehreren Kühlkanälen, die jeweils in unterschiedliche Richtungen verlaufen sind grundsätzlich denkbar. Ebenso kann ein einzelner Kühlkanal Abschnitte aufweisen, die sich in unterschiedliche Richtungen erstrecken.

### Bezugszeichenliste

- 1: Energiespeichereinrichtung
- 3: Grundkörper
- 5a, 5b: Gehäuseteile
- 7: (Breitband-) Anschluss
- 9: Anschluss (-)
- 11: Anschluss (+)
- 13: Oberseite
- 15: Unterseite
- 17a bis 17e: Kühlkanäle
- 19a, 19b: Seitenwände
- 21: Steg
- 23, 23': Lufteinström-Öffnung
- 25, 25': Stromdurchführung
- 27: Gehäusewandung
- 29: Pfeile
- 31: Superkondensator
- 33, 33': Leiterplatte
- 35, 35': Wärmeleitbereich
- h: Höhenrichtung
- q: Querrichtung
- a: Abstand

## Patentansprüche

1. Energiespeichereinrichtung (1), insbesondere zur Verwendung in Kraftfahrzeugen, aufweisend wenigstens einen Grundkörper (3) sowie mindestens ein daran befestigtes Gehäuseteil (5a, 5b) zur Aufnahme mindestens eines Energiespeichers (31),
**dadurch gekennzeichnet, dass**
der Grundkörper (3) zumindest einen integrierten Kühlkanal (17a-17e) für ein gasförmiges Medium aufweist.

2. Energiespeichereinrichtung nach Anspruch 1,
**dadurch gekennzeichnet, dass**
sich der zumindest eine Kühlkanal (17a-17e) in einer Höhenrichtung (h) und/oder in einer Querrichtung und/oder in einer Diagonalrichtung des Grundkörpers (3) erstreckt und zumindest zu einer Oberseite (13) der Energiespeichereinrichtung (1) hin geöffnet ist.

3. Energiespeichereinrichtung nach Anspruch 1 oder 2,
**dadurch gekennzeichnet, dass**
der Grundkörper (3) plattenartig ausgebildet ist und der zumindest eine Kühlkanal (17a-17e) zumindest bereichsweise durch zwei Seitenwandungen (19a, 19b) des plattenartigen Grundkörpers (3) begrenzt wird.

4. Energiespeichereinrichtung nach einem der vorhergehenden Ansprüche,
**dadurch gekennzeichnet, dass**
zwei oder mehr, insbesondere fünf Lüftungskanäle (17a-17e) im Wesentlichen parallel nebeneinander und durch Stege (21) voneinander getrennt angeordnet sind.

5. Energiespeichereinrichtung nach einem der vorhergehenden Ansprüche,
**dadurch gekennzeichnet, dass**
der zumindest eine Kühlkanal (17a-17e) mit mindestens einer sich im Wesentlichen senkrecht zu dem Kühlkanal (17a-17e) erstreckenden und in den Grundkörper (3) eingebrachten Lufteinström-Öffnung (23, 23') in Verbindung steht.

6. Energiespeichereinrichtung nach einem der vorhergehenden Ansprüche,
**dadurch gekennzeichnet, dass**
der wenigstens eine Kühlkanal (17a-17e) mit mindestens zwei an gegenüberliegenden Umfangsseiten des Grundkörpers (3) vorgesehenen Lufteinström-Öffnungen (23, 23') in Verbindung steht.

7. Energiespeichereinrichtung nach einem der vorhergehenden Ansprüche,
**dadurch gekennzeichnet, dass**
die mindestens eine Lufteinström-Öffnung (23, 23') in einer unteren Hälfte, insbesondere in einem unteren Drittel des Grundkörpers (3), bezogen auf die Höhenrichtung des Grundkörpers (3), angeordnet ist.

8. Energiespeichereinrichtung nach einem der vorhergehenden Ansprüche,
**dadurch gekennzeichnet, dass**
an der Energiespeichereinrichtung (1), insbesondere an dem mindestens einen Gehäuseteil (5a, 5b) und/oder an dem Grundkörper (3), wenigstens ein Lüfter, insbesondere Radiallüfter, angeordnet ist.

9. Energiespeichereinrichtung nach einem der vorhergehenden Ansprüche,
**dadurch gekennzeichnet, dass**
der wenigstens eine Lüfter mit einer Lufteinström-Öffnung (23, 23') in Verbindung steht und dazu ausgebildet ist, Luft in die Lufteinström-Öffnung (23, 23') einzuleiten.

10. Energiespeichereinrichtung nach einem der vorhergehenden Ansprüche,
**dadurch gekennzeichnet, dass**
es sich bei dem mindestens einen Energiespeicher (31) um eine Batterie oder um einen Kondensator, insbesondere Superkondensator, handelt.

11. Energiespeichereinrichtung nach einem der vorhergehenden Ansprüche,
**dadurch gekennzeichnet, dass**
der Grundkörper (3) zwei gegenüberliegende Seitenflächen aufweist, wobei an jeder Seitenfläche ein Gehäuseteil (5a, 5b) zur Aufnahme mindestens eines Energiespeichers (31) befestigt ist.

12. Energiespeichereinrichtung nach einem der vorhergehenden Ansprüche,
**dadurch gekennzeichnet, dass**
der Grundkörper (3) mindestens eine Stromdurchführung (25, 25') zur elektrischen Verbindung, insbesondere zur Reihenschaltung, von in getrennten Gehäuseteilen (5a, 5b) angeordneten Energiespeichern (31) aufweist.

13. Energiespeichereinrichtung nach Anspruch 12,
**dadurch gekennzeichnet, dass**
die mindestens eine Stromdurchführung (25, 25') den zumindest einen Kühlkanal (17a-17e) durchgreift und sich insbesondere von einer Seitenfläche des Grundkörpers (3) zu der gegenüberliegenden Seitenfläche des Grundkörpers erstreckt.

14. Energiespeichereinrichtung nach einem der vorhergehenden Ansprüche,
**dadurch gekennzeichnet, dass**
der mindestens eine in einem Gehäuseteil (5a, 5b) angeordnete Energiespeicher (31) zumindest mittelbar, insbesondere über eine Leiterplatte (33), über einen Wärmeleitbereich (35) mit dem Grundkörper (3) verbunden ist.

15. Energiespeichereinrichtung nach einem der vorhergehenden Ansprüche,
**dadurch gekennzeichnet, dass**
der zumindest eine Kühlkanal (17a-17e) zu einer Unterseite (15) der Energiespeichereinrichtung (1) hin geöffnet ist.
